Europäisches Patentamt

European Patent Office

Office européen des brevets

(19)

(11) Numéro de publication : **0 384 089 B1**

(12) **FASCICULE DE BREVET EUROPEEN**

(45) Date de publication du fascicule du brevet :
**16.12.92 Bulletin 92/51**

(51) Int. Cl.⁵ : **G01D 5/16, H01C 1/12,
H01C 10/34**

(21) Numéro de dépôt : **89402963.6**

(22) Date de dépôt : **26.10.89**

(54) **Capteur rotatif potentiométrique.**

(30) Priorité : **29.11.88 FR 8815599**

(43) Date de publication de la demande :
**29.08.90 Bulletin 90/35**

(45) Mention de la délivrance du brevet :
**16.12.92 Bulletin 92/51**

(84) Etats contractants désignés :
**DE GB IT**

(56) Documents cités :
**WO-A-82/02281
DE-A- 2 047 679
DE-A- 3 332 007
FR-A- 1 520 560
FR-A- 2 570 177
US-A- 2 760 036**

(73) Titulaire : **AUTOMOBILES PEUGEOT
75, avenue de la Grande Armée
F-75116 Paris (FR)**
Titulaire : **AUTOMOBILES CITROEN
62 Boulevard Victor-Hugo
F-92200 Neuilly-sur-Seine (FR)**

(72) Inventeur : **Marcuzzi, Laurent
109, rue Anatole France
F-92300 Levallois-Perret (FR)**

(74) Mandataire : **Polus, Camille et al
c/o Cabinet Lavoix 2, Place d'Estienne d'Orves
F-75441 Paris Cedex 09 (FR)**

EP 0 384 089 B1

Jouve, 18, rue Saint-Denis, 75001 PARIS

## Description

La présente invention concerne un capteur rotatif potentiomètrique.

On connait déjà dans l'état de la technique des capteurs destinés par exemple à être montés sur une colonne de direction d'un véhicule automobile et permettant de mesurer l'angle et/ou la vitesse de rotation du volant, ou d'effectuer toute autre mesure angulaire.

Différents types de capteurs ont déjà été décrits et utilisés.

Ainsi par exemple, les capteurs optoélectroniques incrémentaux sont bien connus dans l'état de la technique et utilisés par la majeure partie des constructeurs automobiles. Cependant, ces capteurs présentent un certain nombre d'inconvénients du fait de leur mauvaise résolution, de l'impossibilité de mesurer une position absolue, de leur montage difficile et enfin de leur sensibilité aux poussières et aux températures élevées, de sorte qu'il n'est pas possible de les monter par exemple à proximité du moteur du véhicule.

Il existe également des capteurs dits potentiomètriques pouvant être montés par exemple sur une colonne de direction du véhicule, ces potentiomètres pouvant être des potentiomètres dits multitours et qui présentent les inconvénients d'avoir une très mauvaise résolution et d'être peu fiables et des potentiomètres dits rotatifs sans butée mécanique comportant un secteur mort et donc inutilisables pour mesurer un angle de volant.

Par ailleurs, on connait également d'après le document FR-A-2 570 177, un organe de détection de la position d'une partie mobile dans un véhicule automobile. Cet organe, comme décrit plus particulièrement en regard de la Fig. 4a de ce document, comporte un boîtier de capteur dans lequel est disposée au moins une piste résistive s'étendant en arc de cercle selon un secteur angulaire donné, reliée à une source d'alimentation et en regard de laquelle est monté déplaçable un curseur de raccordement de cette piste résistive à au moins une piste collectrice de sortie de signaux, ce curseur de raccordement étant porté par un équipage mobile disposé dans le boîtier de capteur et déplaçable en rotation dans celui-ci.

Dans le mode de réalisation décrit en regard de cette Fig.4a, ce capteur comporte deux pistes résistives décalées angulairement et associées chacune à une piste collectrice de sortie de signaux, l'utilisation de pistes présentant des caractéristiques différentes permettant d'obtenir un capteur présentant par exemple différentes résolutions suivant la position du curseur.

On conçoit qu'un organe tel que décrit dans ce document, n'est pas adapté pour mesurer la position angulaire par exemple d'un volant d'un véhicule automobile, dans la mesure où celui-ci peut tourner de plus de 360°.

On connait également d'après le document DE-A-2 047 679, un organe tel que décrit dans le document FR-A-2 570 177, dont l'équipage mobile comporte deux bras diamétralement opposés sur chacun desquels est disposé un curseur de raccordement.

Le but de l'invention est donc de résoudre ces problèmes en proposant un capteur rotatif potentiométrique, qui soit simple, fiable, d'un prix de revient peu élevé, dont le montage soit très facile, insensible aux poussières et aux températures élevées, permettant une mesure absolue de la position par exemple d'un volant, à 360° près et présentant une résolution améliorée par rapport aux capteurs décrits dans l'état de la technique.

A cet effet, l'invention a pour objet un capteur rotatif potentiométrique du type comportant un boîtier de capteur dans lequel est disposée au moins une piste résistive s'étendant en arc de cercle selon un secteur angulaire donné, reliée à une source d'alimentation et en regard de laquelle est monté déplaçable un curseur de raccordement de cette piste résistive à au moins une piste collectrice de sortie de signaux, en arc de cercle et concentrique à ladite piste résistive, le curseur de raccordement étant porté par un équipage mobile disposé dans le boîtier de capteur et déplaçable en rotation dans celui-ci, l'équipage mobile comportant deux bras diamétralement opposés sur chacun desquels est disposé un curseur de raccordement, caractérisé en ce qu'il comporte deux pistes collectrices de sortie de signaux, associées à la ou chaque piste résistive, concentriques à cette piste et s'étendant en arc de cercle selon un secteur angulaire égal à celui de la piste résistive, un curseur de raccordement étant adapté pour relier la ou chaque piste résistive à une piste collectrice, et l'autre étant adapté pour relier la ou chaque piste résistive, à l'autre piste conductrice, suivant la position angulaire de l'équipage mobile.

Avantageusement, le secteur angulaire sur lequel s'étendent les pistes est d'au moins 180° et de préférence 190°.

L'invention sera mieux comprise à l'aide de la description qui va suivre, donnée uniquement à titre d'exemple et faite en se référant aux dessins annexés, sur lesquels :

- la Fig.1 représente une vue en coupe de dessus d'un capteur rotatif potentiomètrique selon l'invention; et

- la Fig.2 représente des courbes illustrant le fonctionnement d'un capteur selon l'invention.

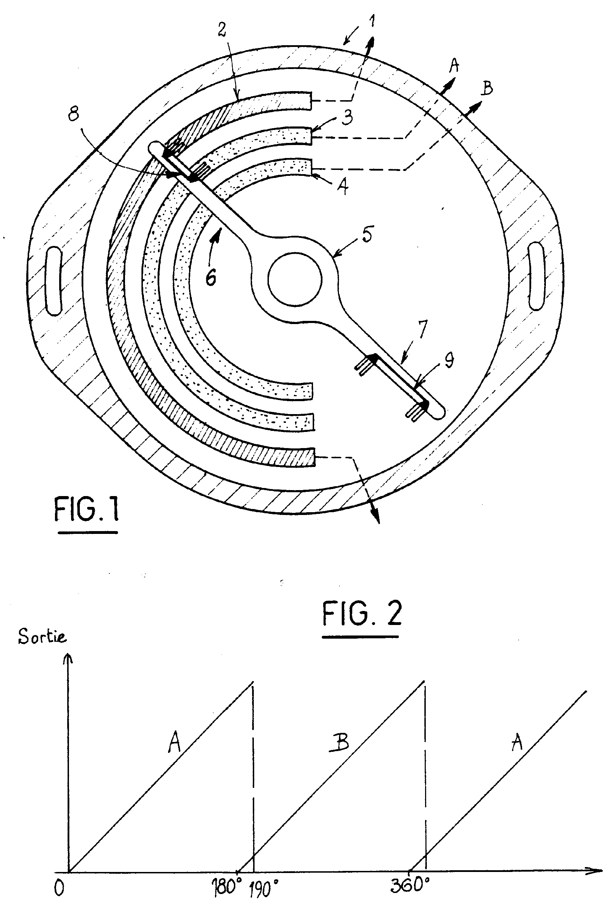

Ainsi qu'on peut le voir sur la Fig.1, un capteur selon l'invention comporte un boîtier de capteur 1 dans lequel est disposée au moins une piste résistive 2 s'étendant en arc de cercle selon un secteur angulaire donné, cette piste résistive étant reliée à une source d'alimentation par l'intermédiaire de bornes d'extrémité.

Deux pistes collectrices de signaux de sortie respectivement 3 et 4 en matériau conducteur de l'électricité sont associées à cette piste résistive. Ces pistes collectrices de signaux de sortie 3 et 4 sont concentriques à la piste résistive et s'étendent en arc de cercle selon un secteur angulaire égal à celui de cette piste résistive.

Avantageusement, le secteur angulaire sur lequel s'étendent les pistes est d'au moins 180° et de préférence environ 190°. Ces pistes collectrices 3 et 4 des signaux de sortie sont reliées à des bornes de connexion A et B de sortie du capteur.

Le capteur selon l'invention comporte également un équipage mobile 5, cet équipage mobile étant déplaçable à rotation dans le boîtier, et comportant deux bras 6 et 7 diamétralement opposés et dont une partie au moins est montée déplaçable en regard des pistes décrites précédemment.

Un curseur de raccordement, respectivement 8 et 9, est prévu sur chaque bras, respectivement 6 et 7 de l'équipage mobile 5, ces curseurs étant montés déplaçables sur les pistes décrites précédemment en fonction de la position de l'équipage mobile et étant adaptés pour relier la piste résistive à l'une ou l'autre des pistes collectrices.

Ainsi par exemple, dans le cas où le bras 6 de l'équipage mobile est en regard des pistes décrites, le curseur de raccordement 8 est en regard des pistes et relie la piste résistive 2 à la piste collectrice de signaux de sortie 3.

Si l'organe mobile, par exemple d'un véhicule automobile auquel est relié l'équipage mobile du capteur, pivote de 180°, le bras 7 de l'équipage mobile vient donc à la place du bras 6 de celui-ci et le curseur 9 remplace le curseur 8 décrit précédemment, de sorte que la piste résistive 2 est reliée à la piste collectrice 4 de sortie de signaux.

Le traitement des signaux de sortie en A ou en B permet ainsi de déterminer la position de l'equipage mobile et donc de l'organe mobile du véhicule qui lui est associé.

Comme on peut le voir sur la Fig.2, les signaux de sortie en A et B se présentent par exemple sous la forme de signaux en dents de scie se chevauchant entre 180° et 190° par exemple, si le secteur angulaire sur lequel s'étendent les pistes résistive et collectrices est d'environ 190° comme mentionné précédemment.

Il va de soi que les signaux de sortie en A et B peuvent être intégrés dans un convertisseur analogique-numérique à 8 bits par exemple.

On conçoit donc que le capteur selon l'invention présente un certain nombre d'avantages par rapport aux capteurs optoélectroniques mentionnés au début de cette description dans la mesure où il permet une mesure absolue à un tour près de la position de l'équipage mobile et donc de l'organe par exemple d'un véhicule qui y est associé et il présente une meilleure résolution en regard des contraintes liées à l'industrie automobile, une meilleure tenue en température, un montage beaucoup plus simple sur le véhicule et un prix de revient plus faible.

Par rapport aux potentiomètres multitours, le capteur selon l'invention présente une meilleure résolution, un prix de revient plus faible et enfin une meilleure stabilité.

## Revendications

1. Capteur rotatif potentiométrique du type comportant un boîtier de capteur (1) dans lequel est disposée au moins une piste résistive (2) s'étendant en arc de cercle selon un secteur angulaire donné, reliée à une source d'alimentation et en regard de laquelle est monté déplaçable un curseur de raccordement (8,9) de cette piste résistive à au moins une piste collectrice (3,4) de sortie de signaux, en arc de cercle et concentrique à ladite piste résistive, le curseur de raccordement étant porté par un équipage mobile (5) disposé dans le boîtier de capteur (1) et déplaçable en rotation dans celui-ci, l'équipage mobile (5) comportant deux bras (6,7) diamétralement opposés sur chacun desquels est disposé un curseur de raccordement (8,9), caractérisé en ce qu'il comporte deux pistes collectrices de sortie de signaux (3,4), associées à la ou chaque piste résistive (2), concentriques à cette piste et s'étendant en arc de cercle selon un secteur angulaire égal à celui de la piste résistive, un curseur de raccordement (8) étant adapté pour relier la ou chaque piste résistive (2) à une piste collectrice (3), et l'autre (9) étant adapté pour relier la ou chaque piste résistive (2), à l'autre piste conductrice (4), suivant la position angulaire de l'équipage mobile.

2. Capteur selon la revendication 1, caractérisé en ce que le secteur angulaire sur lequrl s'étend les pistes est d'au moins 180°.

3. Capteur selon la revendication 2, caractérisé en ce que le secteur angulaire sur lequel s'étend les pistes est d'environ 190°.

## Patentansprüche

1. Potentiometrischer Rotationsmeßfühler vom Typ, der ein Meßfühlergehäuse (1) aufweist, in welchem zumindest eine an eine Stromquelle angeschlossene Widerstandsstrecke (2) angeordnet ist, die sich kreisbogenförmig in einem gegebenen Winkelsektor erstreckt und über welcher ein Verbindungsläufer (8, 9) der Widerstandsstrecke an mindestens einer Kollektorstrecke (3, 4) des Signalausgangs verschiebbar montiert ist, und zwar kreisbogenförmig und konzentrisch zu der Widerstandsstrecke, wobei der Verbindungsläufer durch ein bewegliches Meßwerk (5) getragen wird, das in dem Meßfühlergehäuse (1) angeordnet und in ihm rotierbar ist, wobei das bewegliche Meßwerk (5) zwei zueinander diametral gegenüberliegende Arme (6, 7) aufweist, auf jedem von denen ein Verbindungsläufer (8, 9) angeordnet ist **dadurch gekennzeichnet, daß** er zwei Ausgangssignalwiderstandsstrecken (3, 4) aufweist, die der oder jeder Widerstandsstrecke (2) zugeordnet ist oder sind, und zwar zu dieser Strecke konzentrisch und sich in einem Winkelsektor kreisbogenförmig erstreckend, der gleich dein der Widerstandsstrecke ist, wobei ein Verbindungsläufer (8) angepaßt ist, um die oder jede Widerstandsstrecke (2) mit einer Kollektorstrecke (3) zu verbinden, und der andere (9) angepaßt ist, um die oder jede Widerstandsstrecke (2) mit der anderen Leiterstrecke (4) der Winkelstellung des beweglichen Meßwerks folgend zu verbinden.

2. Meßfühler nach Anspruch 1, dadurch gekennzeichnet, daß der Winkelsektor über den sich die Strecken erstrecken, mindestens 190° ist.

3. Meßfühler nach Anspruch 2, dadurch gekennzeichnet, daß der Winkelsektor, über den sich die Strecken erstrecken, ungefähr 180° ist.

**Claims**

1. Potentiometric rotary sensor of the type comprising a sensor housing (1) in which is disposed at least one resistive path (2) extending in the shape of an arc of a circle along a given angular sector, connected to a power supply source and facing which is movably mounted a slide (8, 9) for connecting this resistive path to at least one collecting path (3, 4) for the output of signals, which is in the shape of an arc of a circle and concentric with respect to said resistive path, the connecting slide being supported by a movable arrangement (5) disposed in the sensor housing (1) and able to rotate in the latter, the movable arrangement (5) comprising two diametrically opposed arms (6, 7), on each of which a connecting slide (8, 9) is disposed, characterised in that it comprises two signal output collecting paths (3, 4), associated with the or each resistive path (2), which are concentric with this path and extend in the shape of an arc of a circle along an angular sector equal to that of the resistive path, a connecting slide (8) being adapted to connect the or each resistive path (2) to a collecting path (3) and the other slide (9) being adapted to connect the or each resistive path (2), to the other conducting path (4), depending on the angular position of the movable arrangement.

2. Sensor according to Claim 1, characterised in that the angular sector over which the paths extend is at least 180°.

3. Sensor according to Claim 2, characterised in that the angular sector over which the paths extend is approximately 190°.

FIG.1

FIG. 2

Sortie